# EUROPÄISCHE PATENTSCHRIFT

(11) **EP 4 206 493 B1**
(45) Veröffentlichungstag und Bekanntmachung des Hinweises auf die Patenterteilung: **03.09.2025**
(21) Anmeldenummer: 22216605.0
(22) Anmeldetag: 23.12.2022
(51) Int. Cl.: F16H 37/06, F16H 37/12, B60L 53/16, F16H 21/44, B60K 15/05

(54) **ANTRIEBSVORRICHTUNG MIT WENIGSTENS EINER ANTRIEBSEINHEIT UND MIT WENIGSTENS EINEM PLANETENGETRIEBE**
DRIVE DEVICE HAVING AT LEAST ONE DRIVE UNIT AND HAVING AT LEAST ONE PLANETARY GEAR
DISPOSITIF D'ENTRAÎNEMENT COMPRENANT AU MOINS UNE UNITÉ D'ENTRAÎNEMENT ET AU MOINS UN ENGRENAGE PLANÉTAIRE

(30) Priorität: 28.12.2021 DE 102021006460; 25.05.2022 DE 102022113356
(43) Veröffentlichungstag der Anmeldung: 05.07.2023
(73) Patentinhaber: Valmet Automotive Oy, 23500 Uusikaupunki (FI)
(72) Erfinder: Kreiling, Nils, 49080 Osnabrück (DE)
(74) Vertreter: Kronthaler, Schmidt & Coll.

(56) Entgegenhaltungen:
- DE-A1- 10 146 836
- DE-A1- 102007 033 418
- DE-U1- 202021 001 685

## Beschreibung

Die Erfindung betrifft eine Antriebsvorrichtung gemäß der im Oberbegriff des Patentanspruches 1 näher definierten Art.

Generell sind mehrwellige Planetengetriebe hinlänglich bekannt und werden aufgrund ihrer hohen Leistungsdichte in vielen technischen Bereichen, wie in Fahrradnabenschaltungen oder in Form von Differentialen, zur Drehmomentweiterleitung vorgesehen.

Über solche Differentiale ist jeweils auch ein Drehzahlausgleich in Fahrzeugquerrichtung zwischen Rädern einer Fahrzeugachse oder in Fahrzeuglängsrichtung zwischen wenigstens zwei Fahrzeugachsen eines Allradfahrzeuges möglich. Dabei wird ein Antriebsmoment einer Antriebsmaschine, das als Antriebsmoment an einer der Wellen eines solchen Differentiales anliegt, auf zwei weitere Wellen übertragen und aus dem Differential ausgeleitet.

Zusätzlich sind auch Differentiale bekannt, bei welchen der ungehinderte Drehzahlausgleich in Fahrzeugquerrichtung oder in Fahrzeuglängsrichtung zwischen zwei Wellen eines Differentials zumindest teilweise begrenzbar ist. Derartige Differentiale werden auch als Sperrdifferentiale bezeichnet. Ein Sperrdifferential hilft in Situationen, in denen oft Reibungsverlust droht. Also dort, wo volle Kraft an beiden oder allen Rädern verlangt wird. Bei Schnee, Eis, Glätte und Schlamm ist es von Vorteil, wenn beide Räder einer Achse angetrieben werden.

Die DE 10 2007 033 418 A1 offenbart eine Antriebsvorrichtung, die unter den Wortlaut des Oberbegriffs des Anspruchs 1 fällt.

Es ist Aufgabe der Erfindungs, eine bauraum- und kostengünstige Antriebsvorrichtung zur Verfügung zu stellen, mit der zwei unterschiedliche Abtriebe mit geringem Steuer- und Regelaufwand mittels einer Antriebseinheit antreibbar sind.

Weitere bevorzugte Aufgaben können sich aus den vorteilhaften Effekten der hier offenbarten Technologie ergeben.

Erfindungsgemäß wird diese Aufgabe mit einer Antriebsvorrichtung mit den Merkmalen des Patentanspruches 1 gelöst. Vorteilhafte Weiterbildungen sind Gegenstand der Unteransprüche sowie der nachfolgenden Beschreibung.

Bei der Antriebsvorrichtung gemäß Anspruch 1 ist über die erste Welle ein Antriebsmoment in das Planetengetriebe einleitbar, und über die zweite Welle oder die dritte Welle ist ein Abtriebsmoment aus dem Planetengetriebe ausleitbar.

Erfindungsgemäß ist ein selbstaktivierender Sperrmechanismus vorgesehen, der eine Drehbewegung der zweiten Welle in Abhängigkeit von Drehstellungen der zweiten Welle und der dritten Welle selbsttätig sperrt und freigibt und eine Drehbewegung der dritten Welle in Abhängigkeit von Drehstellungen der zweiten Welle und der dritten Welle selbsttätig sperrt und freigibt. Der Sperrmechanismus ist dazu eingerichtet, dass die dritte Welle von der ersten Welle rotatorisch antreibbar ist und die zweite Welle vom Sperrmechanismus gleichzeitig drehfest gehalten ist. Zusätzlich ist der Sperrmechanismus dazu eingerichtet, dass die zweite Welle von der ersten Welle rotatorisch antreibbar ist und die dritte Welle vom Sperrmechanismus gleichzeitig drehfest gehalten ist.

Die erfindungsgemäße Antriebsvorrichtung ermöglicht es, zwei Abtriebe über eine Antriebseinheit zu betätigen, wobei dies mit geringem Steuer- und Regelaufwand realisiert ist. Der wechselseitige Antrieb der beiden Abtriebe der zweiten Welle und der dritten Welle erfolgt vorteilhafterweise ohne zusätzliche Steuerung durch eine Bedienperson oder mittels eines Steuergerätes, da sich der Sperrmechanismus jeweils in Abhängigkeit der Drehstellung der zweiten Welle und der Drehstellung der dritten Welle selbsttätig aktiviert oder deaktiviert.

Hierfür umfasst der Sperrmechanismus der in Anspruch 1 beanspruchten Antriebsvorrichtung ein Halteelement, das fest mit der dritten Welle verbunden ist. Das Halteelement greift bei dieser Ausführungsform der Antriebsvorrichtung während eines Betriebszustands des Planetengetriebes, während dem die dritte Welle vom Sperrmechanismus drehfest gehalten ist, in eine drehfest ausgeführte zugeordnete Aufnahme des Sperrmechanismus ein.

Des Weiteren kann der Sperrmechanismus ein Halteelement umfassen, das fest mit der zweiten Welle verbunden ist und während eines Betriebszustands des Planetengetriebes, während dem die zweite Welle drehfest gehalten ist, in eine drehfest ausgeführte zugeordnete Aufnahme eingreift.

Die Aufnahmen des Sperrmechanismus können jeweils Endbereiche von Kulissenbahnen eines längsbeweglich zwischen zwei Endstellungen verschiebbaren Sperrschiebers darstellen. Eine solche Ausführung der erfindungsgemäßen Antriebsvorrichtung ist konstruktiv einfach ausgebildet und durch eine geringe Bauteilanzahl gekennzeichnet, wodurch die Antriebsvorrichtung mit geringem Aufwand montierbar ist.

Bei einer bauraumgünstigen Ausführungsform der erfindungsgemäßen Antriebsvorrichtung erstreckt der sich im Bereich eines Gehäuses linear gelagerte Sperrschieber in radialer Richtung des Planetengetriebes und ist mit einem Langloch ausgeführt. Das Langloch kann sich in Längsrichtung des Sperrschiebers im Sperrschieber erstrecken. Zusätzlich kann die erste Welle des Planetengetriebes in das Langloch eingreifen.

Die Kulissenbahnen können jeweils in voneinander abgewandten Endbereichen des Sperrschiebers vorgesehen sein. Dabei besteht die Möglichkeit, die Kulissenbahnen im Bereich voneinander abgewandten Seiten des Sperrschiebers offen auszuführen und die Halteelemente während einer Drehbewegung der zweiten Welle und einer Drehbewegung der dritten Welle über die offenen Bereiche der Kulissenbahnen in die Kulissenbahnen einzuführen oder aus diesen auszuführen.

Um die Selbstaktivierung des Sperrmechanismus jeweils mit lediglich geringen Stellkräften umsetzen zu können, sind die Kulissenbahnen bei einer Ausführungsform der erfindungsgemäßen Antriebsvorrichtung ausgehend von den offenen Bereichen jeweils mit schräg aufeinander zu verlaufenden Bahnabschnitten ausgeführt. Dabei kann es vorgesehen sein, dass die Verläufe jeweils mit einer Längsrichtung des Sperrschiebers einen spitzen Winkel einschließen. An die Verläufe können sich jeweils in Längsrichtung des Sperrschiebers aufeinander zu verlaufende weitere Bahnabschnitte anschließen, die die Endbereiche der Kulissenbahnen umfassen. Über die schräg aufeinander zu verlaufenden Bahnabschnitte der Kulissenbahnen wird der Sperrschieber von den jeweils darin angeordneten Halteelementen solange linear verschoben, bis eines der Halteelemente aus der Kulissenbahn ausgeleitet wird und das andere Halteelement in der anderen Kulissenbahn drehfest in der Aufnahme der Kulissenbahn gehalten wird.

Bei einer weiteren Ausführungsform der erfindungsgemäßen Antriebsvorrichtung, die auf einfache Art und Weise betreibbar ist, ist der Bahnabschnitt einer Kulissenbahn jeweils derart an den weiteren Bahnabschnitt der anderen Kulissenbahn angepasst, dass das Halteelement der zweiten Welle in Abhängigkeit der Drehrichtung der angetriebenen ersten Welle in die Kulissenbahn eingeführt und dort drehfest gehalten wird, die dem Halteelement der zweiten Welle zugeordnet ist. Zusätzlich wird das Halteelement der dritten Welle gleichzeitig aus der Kulissenbahn geführt, die dem Halteelement der dritten Welle zugeordnet ist. Darüber hinaus sind die Bahnabschnitte der Kulissenbahnen derart aneinander angepasst, dass das Halteelement der dritten Welle in Abhängigkeit der Drehrichtung der angetriebenen ersten Welle in die Kulissenbahn eingeführt und dort drehfest gehalten wird, die dem Halteelement der dritten Welle zugeordnet ist, während das Halteelement der zweiten Welle gleichzeitig aus der Kulissenbahn geführt wird, die dem Halteelement der zweiten Welle zugeordnet ist.

Des Weiteren kann es vorgesehen sein, dass eine Länge des Langloches des Sperrelementes in Längsrichtung des Sperrelementes und lotrechte Abstände zwischen den Endbereichen der Kulissenbahnen und der offenen Bereiche der Kulissenbahnen in Längsrichtung des Sperrelementes aufeinander abgestimmt sind. Dabei kann jeweils ein Endbereich des Langloches, der zu dem Endbereich der Kulissenbahn jeweils abgewandt ist, in dem das Halteelement der zweiten Welle oder das Halteelement der dritten Welle drehfest gehalten ist, an einer zylindrischen Außenseite der ersten Welle anliegen. Dann ist der Stellweg des Sperrschiebers auf konstruktiv einfache Art und Weise und ohne zusätzlichen Bauaufwand durch die erste Welle begrenzt.

Die selbsttätige Aktivierung des Sperrmechanismus ist bei einer konstruktiv einfachen Ausführungsform der erfindungsgemäßen Antriebsvorrichtung dadurch realisiert, dass sowohl die zweite Welle als auch die dritte Welle bei Vorliegen des Sperrschiebers in Positionen zwischen seinen beiden Endlagen von der ersten Welle rotatorisch antreibbar ist.

Die Endbereiche der Kulissenbahnen können jeweils mit Hinterschneidungen ausgeführt sein, über die die Halteelemente jeweils mit einer Haltekraft beaufschlagbar sind, die an den Halteelementen jeweils in Richtung der Aufnahmen angreifen. Dann ist auf einfache Art und Weise ein selbsttätiges Lösen der drehfesten Verbindung zwischen den Halteelementen und den Kulissenbahnen bzw. dem Sperrschieber auf konstruktiv einfache Art und Weise vermieden, die ansonsten beispielsweise durch Vibrationen, Stöße oder dergleichen, verursacht werden können.

Ist die Außenseite der ersten Welle, die jeweils mit den Endbereichen des Langloches zusammenwirkt, eine Außenseite einer drehbar auf der ersten Welle gelagerten Hülse, wird der rotatorische Antrieb der ersten Welle bei Anlage des Sperrschiebers an der Außenseite der ersten Welle durch den Sperrschieber nicht behindert.

Die Halteelemente können jeweils mit zylindrischen Bereichen in die Kulissenbahnen eingreifen. Dann ist auf einfache Art und Weise gewährleistet, dass die erfindungsgemäße Antriebsvorrichtung mit geringen Stellkräften betreibbar ist, da aufgrund der gekrümmten Außenseite der Halteelemente ein Verklemmen der Halteelemente in den Kulissenbahnen vermieden wird.

Bei einer weiteren Ausführungsform der erfindungsgemäßen Antriebsvorrichtung ist die erste Welle des Planetengetriebes als ein Sonnenrad, die zweite Welle des Planetengetriebes als ein Hohlrad und die dritte Welle des Planetengetriebes als ein Planetenträger ausgeführt. Auf dem Planetenträger ist wenigstens ein Planetenrad drehbar gelagert, das sowohl mit dem Sonnenrad als auch mit dem Hohlrad kämmt.

Die Bezugnahme der Ansprüche auf die Zeichnungen durch Verwendung von Bezugszeichen soll den Schutzumfang der Ansprüche nicht beschränken.

Bevorzugte Weiterbildungen ergeben sich aus den Unteransprüchen und der nachfolgenden Beschreibung. Ein Ausführungsbeispiel der Erfindung wird, ohne hierauf beschränkt zu sein, anhand der Zeichnung näher erläutert.

Dabei zeigt:
Fig. 1 eine vereinfachte dreidimensionale Ansicht eines Fahrzeuges mit einer Antriebsvorrichtung, die eine Fahrzeugklappe zum Verschließen und Freigeben einer Öffnung einer Fahrzeugkarosserie des Fahrzeuges betätigt;
Fig. 2 einen in Fig. 1 näher gekennzeichneten Bereich II in einer Seitenansicht und in einem Betriebszustand der Fahrzeugklappe, in der die Fahrzeugklappe die Öffnung der Fahrzeugkarosserie verschließt;
Fig. 3 eine Fig. 2 entsprechende Darstellung der Fahrzeugklappe in teilweise geöffnetem Zustand der Öffnung;
Fig. 4 den Bereich II in einer Fig. 2 entsprechenden Darstellung in einem Betriebszustand der Fahrzeugklappe, in dem die Fahrzeugklappe die Öffnung vollständig freigibt;
Fig. 5a bis Fig. 5g eine Antriebsvorrichtung zum Öffnen und Schließen der Fahrzeugklappe und zum Betätigen einer Ladedose in einer dreidimensionalen Ansicht von schräg oben;
Fig. 6a bis Fig. 6d jeweils eine Seitenansicht der Antriebsvorrichtung gemäß Fig. 5a bis Fig. 5g ausgehend von einer Geschlossenstellung der Fahrzeugklappe bis hin zu einer Offenstellung der Fahrzeugklappe;
Fig. 7a bis Fig. 7f jeweils Seitenansichten der Antriebsvorrichtung ohne die Fahrzeugklappe und die Ladedose ausgehend von einem Betriebszustand der Antriebsvorrichtung, in der die Fahrzeugklappe eine Öffnung der Fahrzeugkarosserie verschließt, bis hin zu einem Betriebszustand der Antriebsvorrichtung, in der die Fahrzeugklappe in ihre Offenstellung verfahren ist;
Fig. 8a bis Fig. 8d die Antriebsvorrichtung während eines Betriebszustandsverlaufes, während dem die Fahrzeugklappe in ihrer Offenstellung vorliegt und die Ladedose aus einer Ruhestellung in eine Wirkstellung überführt wird;
Fig. 9a bis Fig. 9d jeweils Fig. 8a bis Fig. 8d entsprechende Darstellungen der Antriebsvorrichtung während des Betriebszustandsverlaufes, der den Fig. 8a bis Fig. 8d zugrunde liegt, wobei die Ladedose und eine der Ladedose zugeordnete Linearführung nicht dargestellt sind;
Fig. 10a eine Fig. 7a entsprechende Darstellung der Antriebsvorrichtung in einem Betriebszustand der Antriebsvorrichtung, in der die Fahrzeugklappe in ihrer Offenstellung und die Ladedose in ihrer Ruhestellung angeordnet sind; und
Fig. 10b eine Fig. 10a entsprechende Darstellung der Antriebsvorrichtung in einem Betriebszustand, in dem die Fahrzeugklappe in ihrer Offenstellung und die Ladedose in ihre Wirkposition vorliegen.

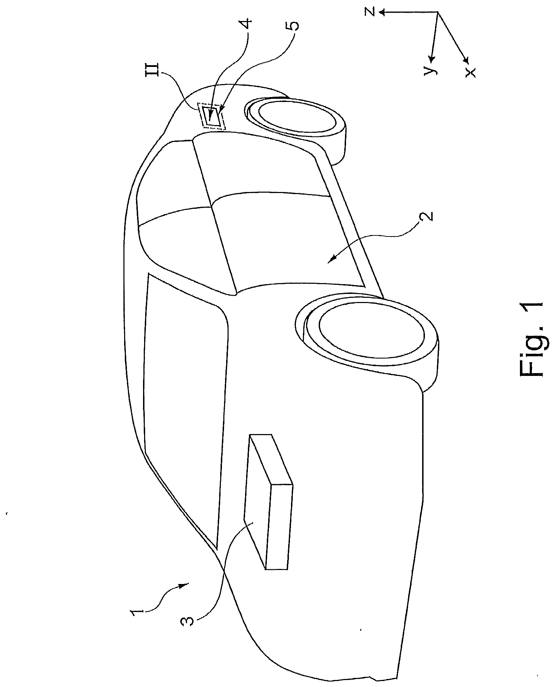

Fig. 1 zeigt ein Fahrzeug 1 mit einer Fahrzeugkarosserie 2 und einer Antriebseinrichtung 3, die wenigstens eine Brennkraftmaschine, wenigstens eine elektrische Maschine oder auch eine Kombination aus wenigstens einer Brennkraftmaschine und wenigstens einer elektrischen Maschine umfassen kann.

Vorliegend weist das Fahrzeug 1 heckseitig eine Fahrzeugklappe 4 auf, die zum Verschließen und Freigeben einer Öffnung 5 in der Fahrzeugkarosserie 2 vorgesehen ist. Die Öffnung 5 ist eine Lademulde, durch die ein elektrisches Steckersystem mit einem entsprechenden Koppelelement, das innerhalb der Fahrzeugkarosserie 2 bzw. unterhalb der Außenhaut des Fahrzeuges 1 angeordnet ist, in Wirkverbindung bringbar ist, um einen elektrischen Energiespeicher des Fahrzeuges 1 aufladen zu können. Die Fahrzeugklappe stellt somit eine sogenannte Ladeklappe dar, die im Wesentlichen als ein ebenes bzw. plattenartiges Element ausgeführt ist.

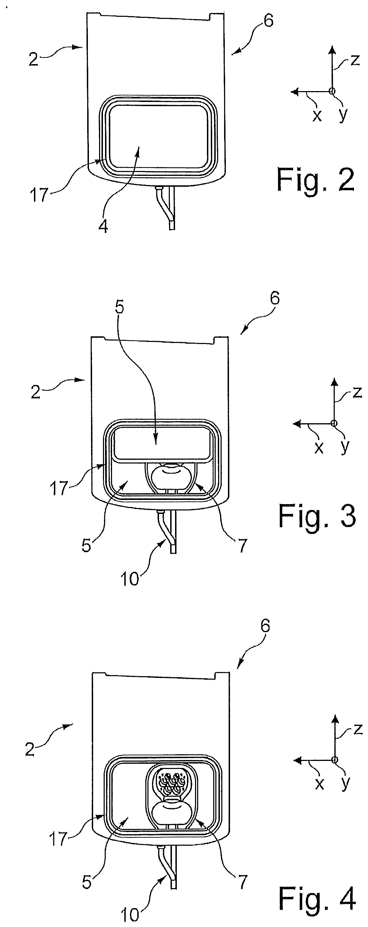

Fig. 2 zeigt einen in Fig. 1 näher gekennzeichneten Bereich II, der die Fahrzeugklappe 4 umfasst. Dabei ist die Fahrzeugklappe 4 in Fig. 2 in einem Betriebszustand dargestellt, in dem die Öffnung 5 vollständig von der Fahrzeugklappe 4 verschlossen ist. Zusätzlich zeigt Fig. 3 eine der Fig. 2 entsprechende Darstellung der Fahrzeugklappe 4 in einem Betriebszustand, in dem die Öffnung 5 teilweise von der Fahrzeugklappe 4 freigegeben ist und in dem die Fahrzeugklappe 4 teilweise in Fahrzeughochrichtung z innerhalb der Fahrzeugkarosserie nach oben verschwenkt ist. In dem in Fig. 4 gezeigten Betriebszustand der Fahrzeugklappe 4 ist die Öffnung 5 von der Fahrzeugklappe 4 freigegeben.

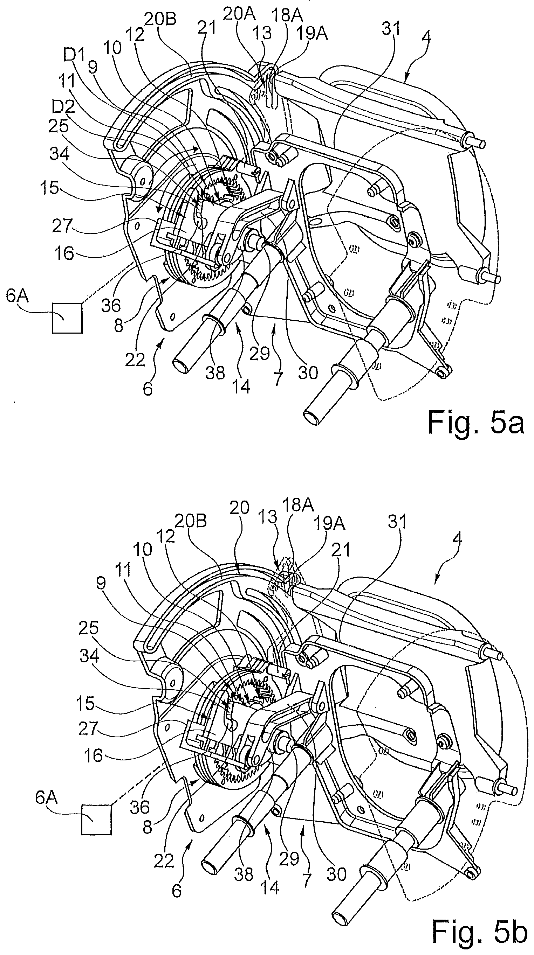

Fig. 5a zeigt eine dreidimensionale Teilansicht einer Antriebsvorrichtung 6 zum Öffnen und Schließen der Fahrzeugklappe 4 sowie zum Verstellen einer zumindest teilweise in Fig. 5a dargestellten Ladedose 7, die ein elektrisches Koppelelement zum Beladen eines elektrischen Energiespeichers des Fahrzeuges 1 darstellt. Die Antriebsvorrichtung 6 umfasst eine Antriebseinheit 6A, die in der Zeichnung nicht näher dargestellt ist und als ein herkömmlicher Elektromotor ausgeführt sein kann. Zusätzlich umfasst die Antriebsvorrichtung 6 ein dreiwelliges Planetengetriebe 8, das ein Hohlrad 9, einen Planetenträger 10 und ein Sonnenrad 11 aufweist. Auf dem Planetenträger 10 sind drei Planetenräder 12 drehbar gelagert, die sowohl mit dem Hohlrad 9 als auch mit dem Sonnenrad 11 kämmen.

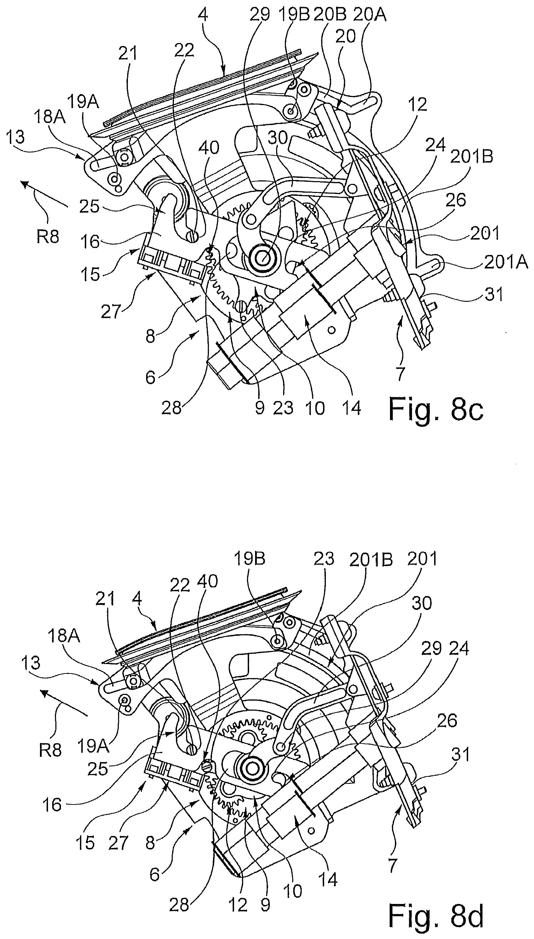

Eine Antriebswelle der Antriebseinheit 6A der Antriebsvorrichtung 6 steht mit dem Sonnenrad 11 in Wirkverbindung, womit ein Antriebsmoment der Antriebseinheit 6A über das Sonnenrad 11 in das Planetengetriebe 8 einleitbar ist. Das Hohlrad 9 ist über ein Hebelelement 13 mit der Fahrzeugklappe 4 verbunden. Die Fahrzeugklappe 4 ist damit von der Antriebseinheit 6A der Antriebsvorrichtung 6 in der später näher beschriebenen Art und Weise aus seiner Geschlossenstellung in seine Offenstellung verfahrbar. Der Planetenträger 10 ist über ein weiteres Hebelelement 30 mit der Ladedose 7 verbunden, um die Ladedose 7 entlang einer Linearführung 14 aus einer in Fig. 5a dargestellten Ruheposition in eine in Fig. 8d näher dargestellte Wirkposition zu überführen.

Während einer ersten Betriebsphase treibt die Antriebseinheit 6A der Antriebsvorrichtung 6 das Sonnenrad 11 in die Drehrichtung D1 rotatorisch an, weshalb auch das Hohlrad 9 in die Drehrichtung D1 verdreht wird. Gleichzeitig ist der Planetenträger 10 mittels eines Sperrmechanismus 15 der Antriebsvorrichtung 6 drehfest gehalten. Hierfür greift ein fest mit dem Planetenträger 10 verbundenes Halteelement 21 in eine drehfeste Aufnahme 22 eines Sperrschiebers bzw. Sperrschiebers 16 ein.

Die Fahrzeugklappe 4 führt aufgrund der Rotation des Hohlrades 9 eine Hubbewegung aus und wird dabei im Wesentlichen in Fahrzeugquerrichtung x bzw. in Richtung Fahrzeuginneres von einer Dichteinheit 17 weg bewegt. Hierfür sind in dem Hebelelement 13 Steuerbahnen 18A, 18B vorgesehen, in die jeweils ein Koppelelement 19A, 19B eingreift. Die Koppelelemente 19A, 19B sind fest mit der Fahrzeugklappe 4 verbunden. Zusätzlich greifen die Koppelelemente 19A, 19B in karosseriefeste Kulissenführungsbahnen 20, 201 eines Kulissenführungssystems ein. Die Kulissenführungsbahnen 20, 201 umfassen jeweils einen ersten Kulissenführungsbahnabschnitt 20A bzw. 201A und einen zweiten Kulissenführungsbahnabschnitt 20B bzw. 201B.

In der Geschlossenstellung der Fahrzeugklappe 4 sind die Koppelelemente 19A, 19B jeweils in ersten Endbereichen der Steuerbahnen 18A, 18B und der Kulissenführungsbahnabschnitte 20A, 201A angeordnet. Wird das Hebelelement 13 von der Antriebseinheit 6A über das Planetengetriebe 8 durch Rotation des Hohlrades 9 aus der in Fig. 5a gezeigten Drehstellung in die in Fig. 5b gezeigte Position verstellt bzw. verdreht, gleiten die Koppelelemente 19A, 19B in den Steuerbahnen 18A, 18B und in den Kulissenführungsbahnabschnitten 20A, 201A der Kulissenführungsbahnen 20, 201 entlang, bis die Koppelelemente 19A, 19B zweite Endbereiche der Steuerbahnen 18A, 18B erreichen. Während dieser Drehbewegung des Hebelelementes 13 und dem Entlanggleiten der Koppelelemente 19A, 19B in den Steuerbahnen 18A, 18B und in den Steuerbahnabschnitten 20A, 201A der Kulissenführungsbahnen 20, 201 führt die Fahrzeugklappe 4 die vorgeschriebene Hubbewegung ausgehend aus der Geschlossenstellung in Richtung Fahrzeuginneres aus.

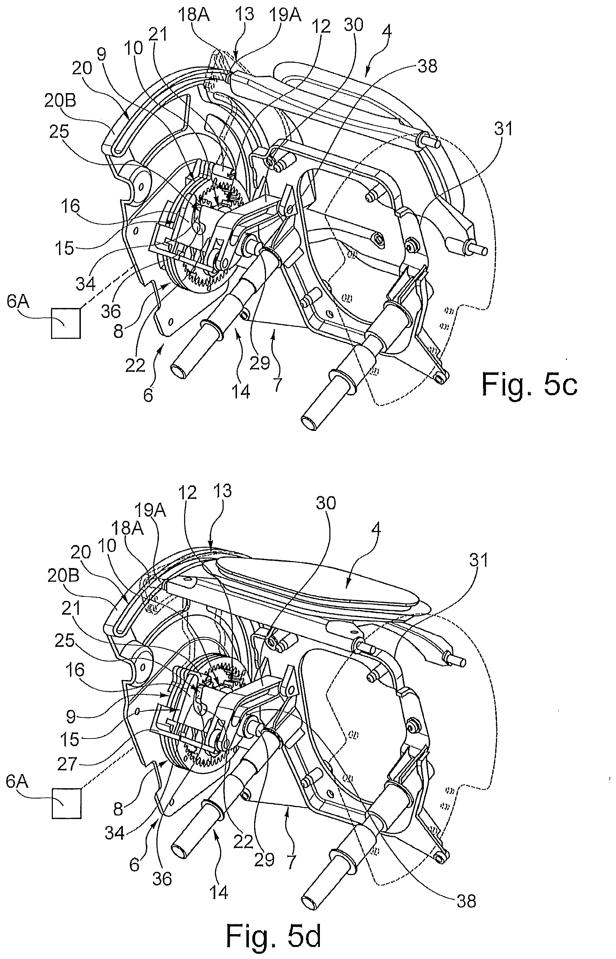

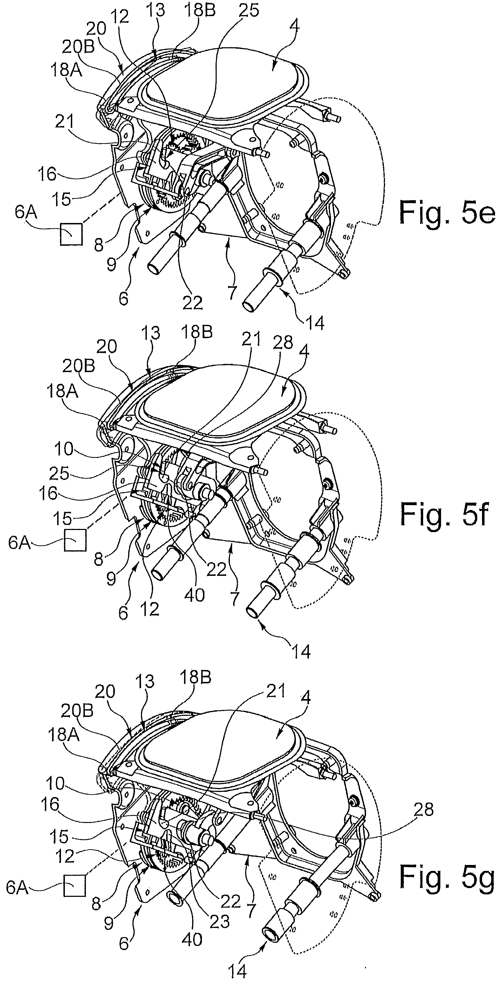

Wird das Hebelelement 13 durch die weitere Rotation des Hohlrades 9 in die Drehrichtung D1 weiter aus der in Fig. 5b gezeigten Stellung in die in Fig. 5c dargestellte Wirkstellung überführt, wird die Fahrzeugklappe 4 in Fahrzeughochrichtung z aus der in Fig. 5b gezeigten Position in die in Fig. 5c dargestellte Position unter die Außenhaut der Fahrzeugkarosserie 2 verschwenkt. Treibt die Antriebseinheit 6A das Hohlrad 9 über das Sonnenrad 11 und die Planetenräder 12 weiter in die Drehrichtung D1 an, wird die Fahrzeugklappe 4 aus der in Fig. 5c dargestellten Position über die in Fig. 5d in die in Fig. 5e gezeigte Stellung überführt, in der die Fahrzeugklappe 4 in ihrer sogenannten Offenstellung angeordnet ist.

In der Offenstellung gibt die Fahrzeugklappe 4 die Öffnung 5 der Fahrzeugkarosserie 2 vollständig frei. Zusätzlich greift in der Offenstellung der Fahrzeugklappe 4 ein weiteres Halteelement 23 des Sperrmechanismus 15 in eine drehfest ausgeführte weitere Aufnahme 24 des Sperrschiebers 16 ein. Das weitere Halteelement 23 ist fest mit dem Hohlrad 9 verbunden. Damit wird das Hohlrad 9, wenn das Sonnenrad 11 von der Antriebseinheit 6A der Antriebsvorrichtung 6 weiter in die Drehrichtung D1 angetrieben wird, vom Sperrmechanismus 15 drehfest gehalten. Die Aufnahmen 22 und 24 des Sperrmechanismus 15 stellen jeweils Endbereiche von Kulissenbahnen 25, 26 des längsbeweglich zwischen zwei Endstellungen verschiebbaren Sperrschiebers 16 bzw. Sperrschiebers dar. Die Halteelemente 21 und 23 greifen jeweils mit zylindrischen Bereichen in die Kulissenbahnen 25, 26 ein. Der Drehwinkelbereich des Hohlrades 9 kann bei einer bevorzugten Ausführungsform auf etwa 80° limitiert sein.

Der Sperrschieber 16 ist im Bereich eines Gehäuses 27 linear verschiebbar gelagert und erstreckt sich in radialer Richtung des Planetengetriebes 8. Zusätzlich ist der Sperrschieber 16 mit einem Langloch 28 ausgeführt. In das Langloch 28 greift eine Sonnenradwelle 29 ein, die mit der Antriebswelle der Antriebseinheit 6A zusammenwirkt. Das Langloch 28 erstreckt sich im Wesentlichen in Längsrichtung im Sperrschieber 16.

Die vorbeschriebene Ausführung des Sperrmechanismus 15 ermöglicht es in Verbindung mit dem Planetengetriebe 8 die Fahrzeugklappe 4 und die Ladedose 7 im Wesentlichen sequenziell nacheinander über eine einzige Antriebseinheit 6A bzw. einen einzigen Elektromotor bzw. wechselweise zu betätigen, um die Fahrzeugklappe 4 zwischen ihrer Offenstellung und ihrer Schließstellung bzw. ihrer Geschlossenstellung zu verfahren und die Ladedose 7 zwischen ihrer in Fig. 5f gezeigten Ruheposition und ihrer in Fig. 5g gezeigten Wirkposition in Fahrzeugquerrichtung y zu verstellen.

Während eines rotatorischen Antriebs durch die Antriebseinheit 6A der Antriebsvorrichtung 6 wird die Ladedose 7 über die Linearführung 14 im Wesentlichen in Fahrzeugquerrichtung y zwischen der Ruheposition und der Wirkposition verfahren. Dabei sind eine Verstellung der Ladedose 7 und eine Verstellung der Fahrzeugklappe 4 so aufeinander abgestimmt, dass die Ladedose 7 in der Offenstellung der Fahrzeugklappe 4 in der Wirkposition und in der Geschlossenstellung der Fahrzeugklappe 4 in der Ruheposition vorliegt. Dabei ist ein lotrechter Abstand zwischen einer Seite 31 der Ladedose 7, die einer Außenseite der Fahrzeugkarosserie 2 zugewandt ist, in der Wirkposition der Ladedose 7 und in Fahrzeugquerrichtung y kleiner als in der Ruheposition der Ladedose 7. Die Ruheposition der Ladedose 7 ist in Fig. 5f gezeigt, während die Ladedose 7 in Fig. 5g in ihrer Wirkposition dargestellt .

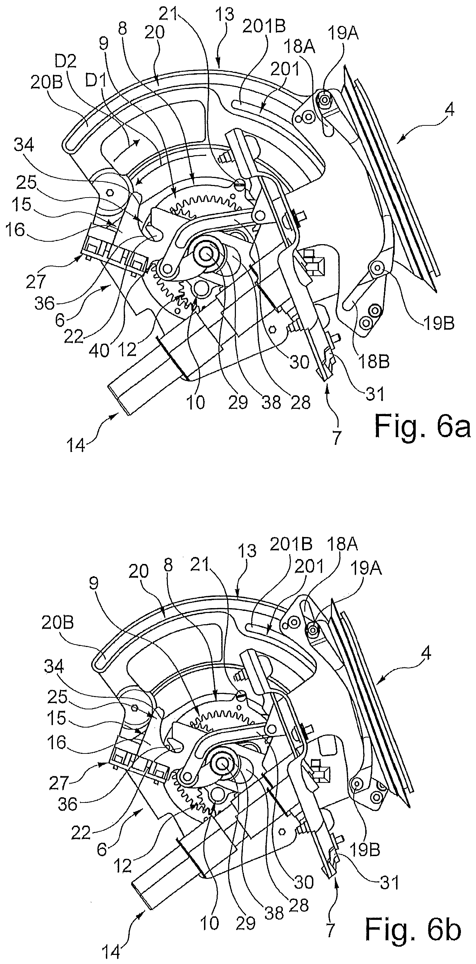

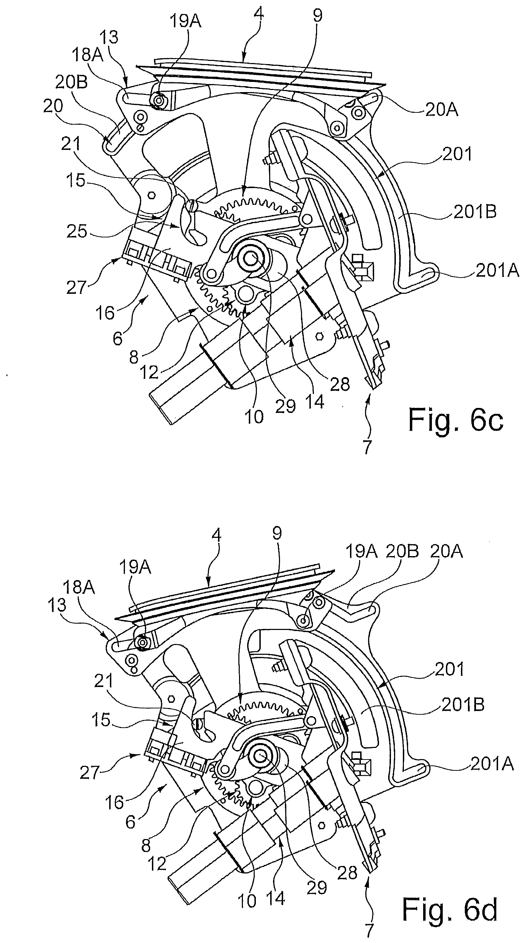

Fig. 6a bis Fig. 6d zeigen jeweils eine Seitenansicht der Antriebsvorrichtung 6 zusammen mit der Fahrzeugklappe 4 und der Ladedose 7 während eines Betriebszustandsverlaufes, während dem die Fahrzeugklappe 4 aus der Geschlossenstellung in ihre Offenstellung überführt wird, und während dem die Ladedose 7 in ihrer Ruhestellung positioniert ist. Aus den Darstellungen gemäß Fig. 6a bis Fig. 6d geht hervor, dass das Halteelement 21, das fest mit dem Hohlrad 9 verbunden ist, während des rotatorischen Antriebes des Hohlrades 9 und der damit verbundenen Hub- und Schwenkbewegung der Fahrzeugklappe 4 in Richtung der Kulissenbahn 25 des Sperrschiebers 16 geführt wird. Kurz vor Erreichen der Offenstellung der Fahrzeugklappe 4 greift das Haltelement 21 in der in Fig. 6c dargestellten Art und Weise in die Kulissenbahn 25 ein. Wird das Hohlrad 9 weiter in die Drehrichtung D1 verdreht, wird der Sperrschieber 16 vom Halteelement 21 in radialer Richtung R8 des Planetengetriebes 8 linear verstellt. Dabei wird der Sperrschieber 16 aus der in Fig. 6c dargestellten Position zunehmend in die in Fig. 6d gezeigte Stellung translatorisch verfahren, in der das Halteelement 21 noch nicht vollständig in der Aufnahme 22 angeordnet ist. Ist das Halteelement 21 vollständig in der Aufnahme 22 angeordnet, ist das Hohlrad 9 vom Sperrschieber 16 gegen eine weitergehende Rotation in die Drehrichtung D1 gesperrt.

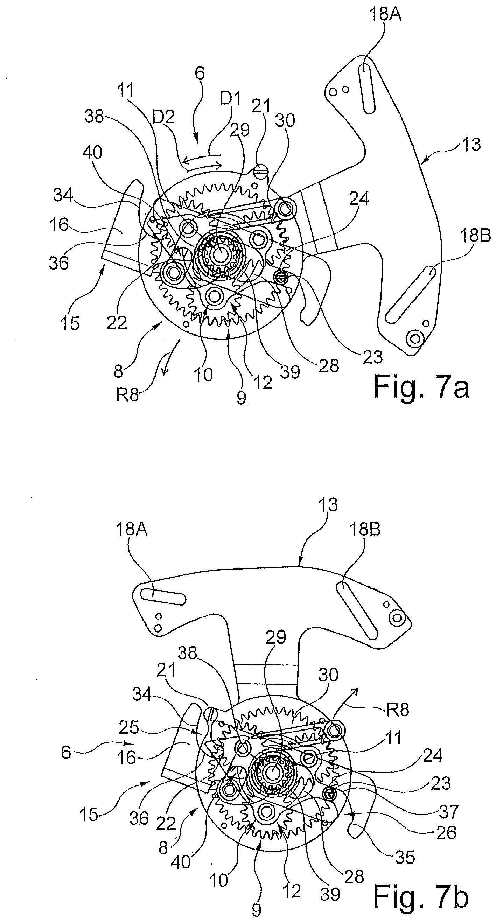

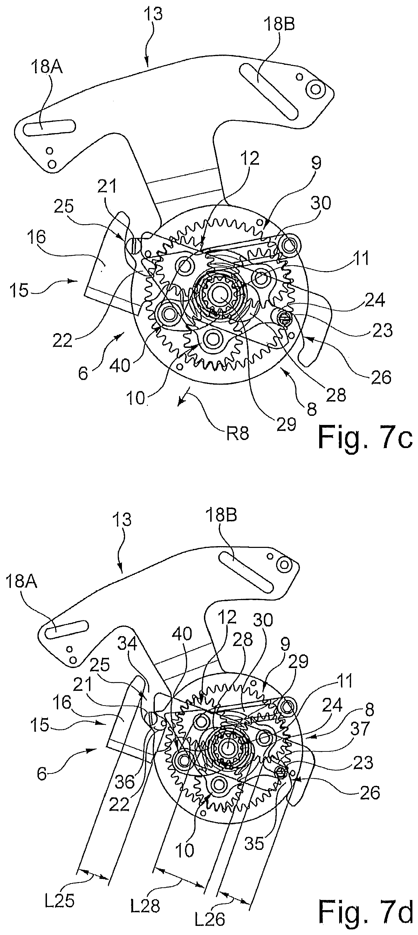

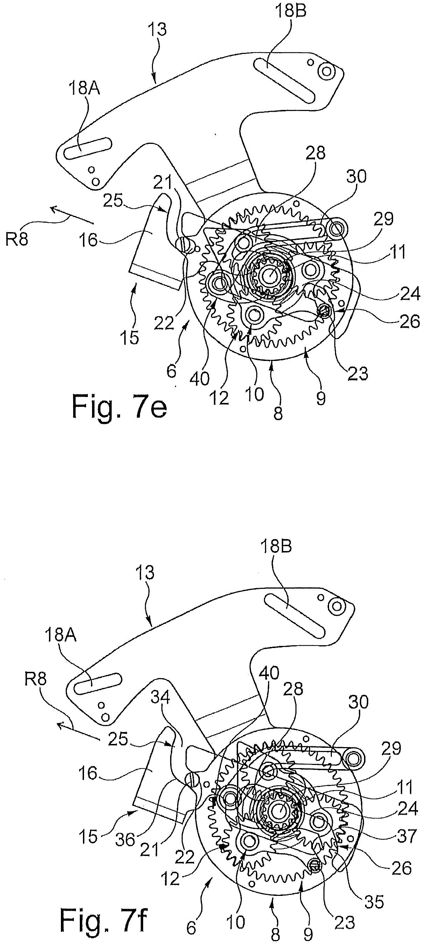

Fig. 7a bis Fig. 7f zeigen jeweils Teilseitenansichten der Antriebsvorrichtung 6 ohne die Fahrzeugklappe 4 und die Ladedose 7. Die Darstellungen gemäß Fig. 7a bis Fig. 7f zeigen die Antriebsvorrichtung 6 während eines Betriebszustandswechsels ausgehend von einem Betriebszustand, in dem die Fahrzeugklappe 4 in ihrer Geschlossenstellung vorliegt, bis hin zu einem Betriebszustand, in dem die Fahrzeugklappe 4 in ihrer Offenstellung positioniert ist. Die Ladedose 7 verbleibt dabei in ihrer Ruhestellung.

In Fig. 7a ist das weitere Halteelement 23, das fest mit dem Planetenträger 10 verbunden ist, fest in der weiteren Aufnahme 24 des Sperrschiebers 16 angeordnet. Damit wird der Planetenträger 10 vom Sperrschieber 16 drehfest gehalten. Treibt die Antriebseinheit 6A der Antriebsvorrichtung 6 das Hohlrad 9 in die Drehrichtung D1 an, wird das Hebelelement 13 aus der in Fig. 7a dargestellten Position zunehmend in die in Fig. 7b dargestellte Drehstellung verstellt. Gleichzeitig rotiert das Halteelement 21 gemeinsam mit dem Hohlrad 9 in Richtung der Kulissenbahn 25 des Sperrschiebers 16. Bei weiterer Rotation des Hohlrades 9 greift das Halteelement 21 in die Kulissenbahn 25 ein und verstellt der Sperrschieber 16 in radialer Richtung R8 des Planetengetriebes 8. Das weitere Halteelement 23 wird dabei in der in Fig. 7c dargestellten Art und Weise aus der weiteren Aufnahme 24 des Sperrschiebers 16 geführt, so dass die drehfeste Verbindung zwischen dem Sperrschieber 16 und dem Planetenträger 10 gelöst wird.

Die Kulissenbahnen 25 und 26 des Sperrschiebers 16 sind jeweils in Endbereichen des Sperrschiebers 16 vorgesehen. Zusätzlich sind die Kulissenbahnen 25 und 26 im Bereich von einander abgewandten Seiten 16A, 16B des Sperrschiebers 16 offen ausgeführt. Damit sind die Halteelemente 21 und 23 während einer Drehbewegung des Hohlrades 9 und des Planetenträgers 10 über die offenen Bereiche der Kulissenbahnen 25 und 26 in die Kulissenbahnen 25 und 26 einführbar und aus diesen ausführbar.

Des Weiteren umfassen die Kulissenbahnen 25 und 26 ausgehend von den offenen Bereichen jeweils schräg aufeinander zu verlaufende Bahnabschnitte 34, 35, deren Verläufe jeweils mit einer Längsrichtung des Sperrschiebers 16 einen spitzen Winkel einschließen. An die Bahnabschnitte 34, 35 schließen sich jeweils in Längsrichtung des Sperrschiebers 16 aufeinander zu verlaufende weitere Bahnabschnitte 36, 37 an, die in den Endbereichen bzw. Aufnahmen 22, 24 der Kulissenbahnen 25, 26 enden.

Die Bahnabschnitte 34, 36 der Kulissenbahn 25 sind derart an die Bahnabschnitte 35, 37 der Kulissenbahn 26 angepasst, dass das Halteelement 21 des Hohlrades 9 in Abhängigkeit der Drehrichtung D1 oder der dazu entgegengesetzten Drehrichtung D2 der angetriebenen ersten Welle bzw. des angetriebenen Sonnenrades 11 in die Kulissenbahn 25 eingeführt und dort drehfest gehalten wird, während das Halteelement 23 des Planetenträgers 10 gleichzeitig aus der Kulissenbahn 26 geführt wird. Zusätzlich sind die Bahnabschnitte 34 bis 37 der Kulissenbahnen 25, 26 derart aneinander angepasst, dass das Halteelement 23 des Planetenträgers 10 in Abhängigkeit der Drehrichtung D2 des Sonnenrades 11 in die Kulissenbahn 26 eingeführt und dort drehfest gehalten wird, während das Halteelement 21 des Hohlrades 9 gleichzeitig aus der Kulissenbahn 25 geführt wird.

Darüber hinaus sind eine Länge L28 des Langloches 28 des Sperrschiebers 16 und lotrechte Abstände L25, L26 zwischen den Endbereichen 22, 24 der Kulissenbahnen 25, 26 und den offenen Bereichen der Kulissenbahnen 25, 26 in Längsrichtung des Sperrschiebers 16 aufeinander abgestimmt. Dabei ist die Abstimmung derart, dass jeweils ein Endbereich des Langloches 28, der zu dem Endbereich 22 bzw. 24 der Kulissenbahn 25 bzw. 26 jeweils abgewandt ist, in dem das Halteelement 21 des Hohlrades 9 oder das Halteelement 23 des Planetenträgers 10 drehfest gehalten ist, an einer zylindrischen Außenseite 38 der Sonnenradwelle 29 anliegt und jeweils eine weitere Verstellung des Sperrschiebers in radialer Richtung R8 des Planetengetriebes 8 nicht möglich ist.

Zudem sind der Sperrschieber 16 und das Planetengetriebe 8 derart aufeinander abgestimmt, dass sowohl das Hohlrad 9 als auch der Planetenträger 10 bei Vorliegen des Sperrschiebers 16 in Positionen zwischen seinen beiden Endlagen von der Sonnenradwelle 29 bzw. dem Sonnenrad 11 rotatorisch antreibbar ist.

Die Endbereiche bzw. Aufnahmen 22, 24 der Kulissenbahnen 25, 26 können jeweils mit Hinterschneidungen ausgeführt sein. Über die Hinterschneidungen sind die Halteelemente 21 und 23 jeweils mit einer Haltekraft beaufschlagbar, die an den Halteelementen 21, 23 jeweils in Richtung der Aufnahmen 22, 24 angreifen. Dadurch ist auf konstruktiv einfache Art und Weise jeweils ein unerwünschtes Lösen der Wirkverbindung zwischen dem Sperrschieber 16 und den Halteelementen 21, 23 vermeidbar, wenn die Haltelemente 21, 23 jeweils in den Aufnahmen 22, 24 angeordnet sind.

Die Außenseite 38 der Sonnenradwelle 29, die jeweils mit den Endbereichen des Langloches 28 zusammenwirkt, kann bei einer Ausführungsform des Fahrzeuges 1 eine Außenseite einer drehbar auf der Sonnenradwelle 29 gelagerten Hülse 39 sein.

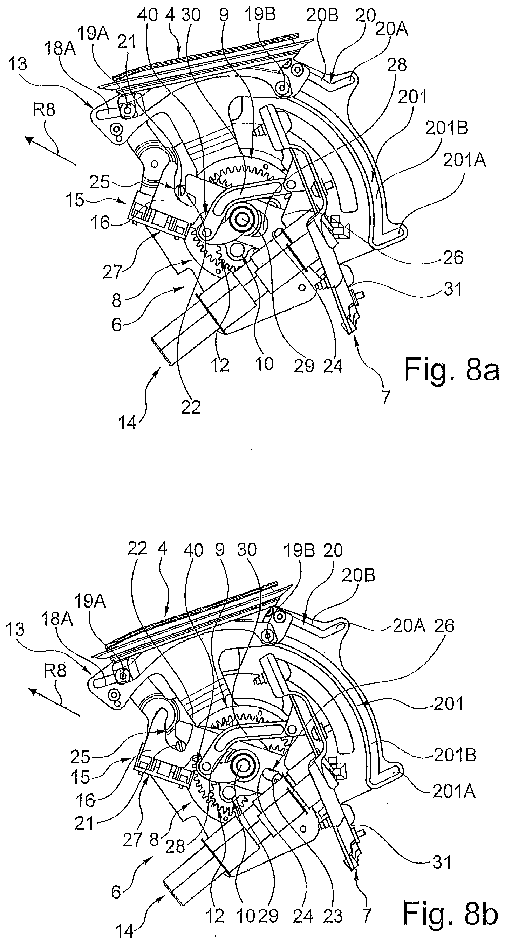

Fig. 8a zeigt die Antriebsvorrichtung 6 in einem Betriebszustand, in dem die Fahrzeugklappe 4 in einer Position angeordnet ist, die nahezu der Offenstellung der Fahrzeugklappe 4 entspricht, und in dem die Ladedose 7 in ihrer Ruheposition vorliegt.

Der Sperrschieber 16 des Sperrmechanismus 15 ist in Fig. 8a in einer Zwischenlängsstellung angeordnet, in der das Hohlrad 9 und der Planetenträger 10 bei rotierendem Sonnenrad 11 rotatorisch angetrieben werden, da weder das Halteelement 21 in der Aufnahme 22 noch das weitere Halteelement 23 in der weiteren Aufnahme 24 angeordnet ist. Wird das Sonnenrad 11 ausgehend von dem in Fig. 8a dargestellten Betriebszustand der Antriebsvorrichtung 6 von der Antriebseinheit 6A weiter in die Drehrichtung D1 angetrieben, bewirkt der rotatorische Antrieb der Antriebseinheit 6A, dass das Halteelement 21 des Hohlrades 9 aus der in Fig. 8a gezeigten Position in die in Fig. 8b dargestellte Position überführt wird, in der das Halteelement 21 vollständig in der Aufnahme 22 der Kulissenbahn 25 angeordnet ist und das Hohlrad 9 vom Sperrschieber 16 drehfest gehalten wird.

Wird das Sonnenrad 11 weiter in die Drehrichtung D1 angetrieben, wird der Planetenträger 10 aus der in Fig. 8a und Fig. 8b jeweils gezeigten Drehstellung in die in Fig. 8c dargestellte Drehstellung überführt, in der das weitere Halteelement 23 nicht mehr in die Kulissenbahn 26 eingreift und das weitere Hebelelement 30 gegenüber den in Fig. 8a und Fig. 8b gezeigten Stellungen verschwenkt ist. Fig. 8d zeigt die Antriebsvorrichtung 6 in einem Betriebszustand, in dem die Fahrzeugklappe 4 vollständig in ihrer Offenstellung angeordnet ist und die Ladedose 7 in ihre Wirkposition überführt ist. In diesem Betriebszustand der Antriebsvorrichtung 6 greift das weitere Halteelement 23 formschlüssig in eine Ausnehmung 40 des Sperrschiebers 16 ein, die auf der Seite 16B des Sperrschiebers 16 vorgesehen ist. Dabei sind eine Position des weiteren Halteelementes 23 und eine Position der Ausnehmung 40 so aufeinander abgestimmt, dass das weitere Halteelement 23 eine lineare Stellbewegung des Sperrschiebers 16 bei vorliegendem Formschluss zwischen dem weiteren Halteelement 23 und dem Sperrschieber 16 im Bereich der Ausnehmung 40 sperrt, solange das Sonnenrad 11 nicht in die Drehrichtung D2 rotatorisch von der Antriebseinheit 6A der Antriebsvorrichtung 6 angetrieben wird.

Ein Antrieb des Sonnenrades 11 in die Drehrichtung D2 ausgehend von dem in Fig. 8d dargestellten Betriebszustand der Antriebsvorrichtung 6 bewirkt, dass zunächst die Ladedose 7 aus der Wirkposition in ihre Ruheposition verstellt wird und anschließend die Fahrzeugklappe 4 aus der Offenstellung in ihre Geschlossenstellung überführt wird.

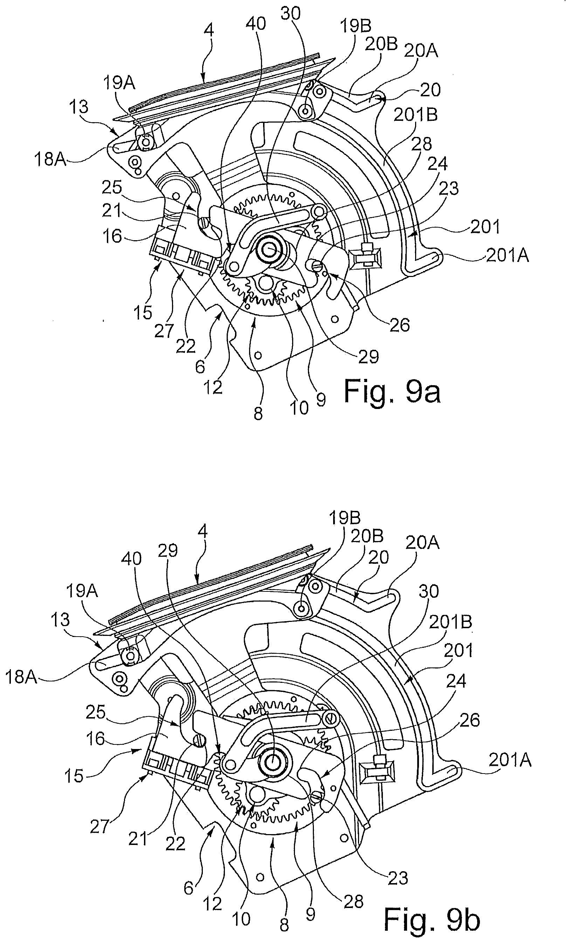

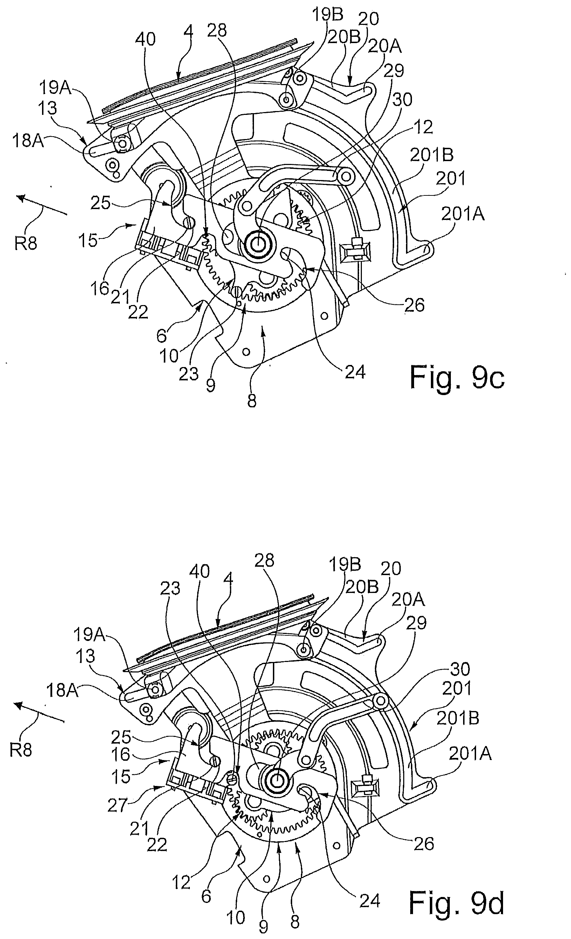

Fig. 9a bis Fig. 9d stellen jeweils im Wesentlichen Fig. 8a bis Fig. 8d entsprechende Seitenansichten der Antriebsvorrichtung 6 und der Fahrzeugklappe 4 dar. Dabei sind in Fig. 9a bis Fig. 9d die Ladedose 7 und die ihr zugeordnete Linearführung 14 nicht dargestellt, um insbesondere im Betriebszustand der Antriebsvorrichtung 6, der jeweils in Fig. 8b und in Fig. 9b dargestellt ist, der Zeichnung die Position des weiteren Halteelementes 23 entnehmen zu können.

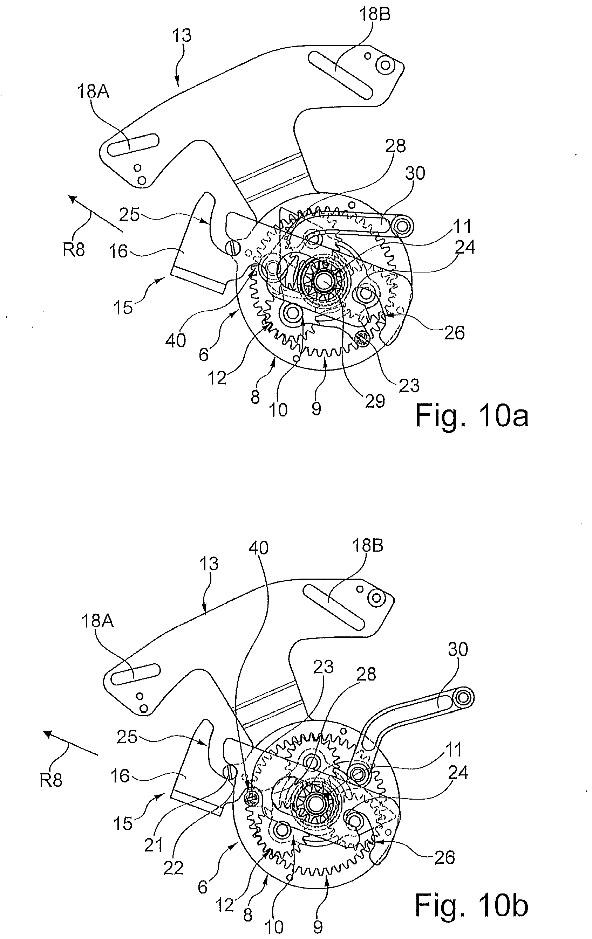

Fig. 10a und Fig. 10b zeigen jeweils eine Seitenansicht eines Teils der Antriebsvorrichtung 6 ohne die Fahrzeugklappe 4 und die Ladedose 7. Dabei ist in Fig. 10a ein Betriebszustand der Antriebsvorrichtung 6 gezeigt, in der die Fahrzeugklappe 4 vollständig in ihrer Offenstellung vorliegt, während die Ladedose 7 in ihrer Ruhestellung angeordnet ist. Im Unterschied dazu zeigt Fig. 10b die Antriebsvorrichtung 6 in dem Betriebszustand, in dem die Fahrzeugklappe 4 in ihrer Offenstellung angeordnet ist, während die Ladedose 7 in ihrer Wirkposition vorliegt.

Generell weist das Fahrzeug 1 einen innovativen Ladedosenmechanismus auf, bei dem die Steuerung eines rotatorischen Antriebs einer Antriebseinheit 6A, wie eines Elektromotors oder dergleichen, über ein Planetengetriebe und einen dem Planetengetriebe zugeordneten selbstaktivierenden Sperrmechanismus für die Betätigung der Ladedose 7 und der Fahrzeugklappe 4 erfolgt.

## Patentansprüche

1. Antriebsvorrichtung (6) mit wenigstens einer Antriebseinheit (6A) mit wenigstens einem Planetengetriebe (8) mit einer ersten Welle (11), einer zweiten Welle (9) und wenigstens einer dritten Welle (10), wobei über die erste Welle (11) jeweils ein Antriebsmoment der Antriebseinheit (6A) in das Planetengetriebe (8) einleitbar ist und über die zweite Welle (9) und die dritte Welle (10) jeweils ein Abtriebsmoment aus dem Planetengetriebe (8) ausleitbar ist,
wobei ein selbstaktivierender Sperrmechanismus (15) vorgesehen ist, mittels dem die zweite Welle (9) und die dritte Welle (10) des Planetengetriebes (8) wechselweise drehfest darstellbar sind, während jeweils die zweite Welle (9) oder die dritte Welle (10) von der Antriebseinheit (6A) über die erste Welle (11) rotatorisch antreibbar ist,
**dadurch gekennzeichnet, dass** der Sperrmechanismus (15) ein Halteelement (23) umfasst, das fest mit der dritten Welle (10) verbunden ist und während eines Betriebszustands des Planetengetriebes (8), während dem die dritte Welle (10) drehfest gehalten ist, in eine drehfest ausgeführte zugeordnete Aufnahme (24) eingreift.

2. Antriebsvorrichtung nach Anspruch 1
**dadurch gekennzeichnet, dass** der Sperrmechanismus (15) ein Halteelement (21) umfasst, das fest mit der zweiten Welle (9) verbunden ist und während eines Betriebszustands des Planetengetriebes (8), während dem die zweite Welle (9) drehfest gehalten ist, in eine drehfest ausgeführte zugeordnete Aufnahme (22) eingreift.

3. Antriebsvorrichtung nach Anspruch 2,
**dadurch gekennzeichnet, dass** die Aufnahmen (22, 24) des Sperrmechanismus (15) jeweils Endbereiche von Kulissenbahnen (25, 26) eines längsbeweglich zwischen zwei Endstellungen verschiebbaren Sperrschiebers (16) darstellen.

4. Antriebsvorrichtung nach Anspruch 3,
**dadurch gekennzeichnet, dass** der längsbeweglich zwischen zwei Endstellungen verschiebbare Sperrschieber (16) im Bereich eines Gehäuses (27) linear gelagert ist und sich in radialer Richtung (R8) des Planetengetriebes (8) erstreckt und mit einem Langloch (28) ausgeführt ist, in das die erste Welle (11) eingreift und das sich in Längsrichtung des Sperrschiebers (16) im Sperrschieber (16) erstreckt.

5. Antriebsvorrichtung nach Anspruch 3 oder 4,
**dadurch gekennzeichnet, dass** die Kulissenbahnen (25, 26) jeweils in von einander abgewandten Endbereichen des Sperrschiebers (16) vorgesehen sind, wobei die Kulissenbahnen (25, 26) im Bereich von einander abgewandten Seiten (16A, 16B) des Sperrschiebers (16) offen ausgeführt sind und die Halteelemente (21, 23) während einer Drehbewegung der zweiten Welle (9) und der dritten Welle (10) über die offenen Bereiche der Kulissenbahnen (25, 26) in die Kulissenbahnen (25, 26) einführbar und aus diesen ausführbar sind.

6. Antriebsvorrichtung nach Anspruch 5,
**dadurch gekennzeichnet, dass** die Kulissenbahnen (25, 26) ausgehend von den offenen Bereichen jeweils mit schräg aufeinander zu verlaufenden Bahnabschnitten (34, 35) ausgeführt sind, deren Verläufe jeweils mit einer Längsrichtung des Sperrschiebers (16) einen spitzen Winkel einschließen und an die sich jeweils in Längsrichtung des Sperrschiebers (16) aufeinander zu verlaufende weitere Bahnabschnitte (36, 37) anschließen, die die Endbereiche (22, 24) der Kulissenbahnen (25, 26) umfassen.

7. Antriebsvorrichtung nach Anspruch 6,
**dadurch gekennzeichnet, dass** der Bahnabschnitt (34 bzw. 36) einer Kulissenbahn (25 oder 26) jeweils derart an den weiteren Bahnabschnitt (37 bzw. 35) der anderen Kulissenbahn (26 oder 25) angepasst ist, dass das Haltelement (21) der zweiten Welle (9) in Abhängigkeit der Drehrichtung (D1) der angetriebenen ersten Welle (11) in die Kulissenbahn (25) eingeführt und dort drehfest gehalten wird, die dem Halteelement (21) der zweiten Welle (9) zugeordnet ist, während das Halteelement (23) der dritten Welle (10) gleichzeitig aus der Kulissenbahn (26) geführt wird, die dem Haltelement (23) der dritten Welle (10) zugeordnet ist, und dass das Haltelement (23) der dritten Welle (10) in Abhängigkeit der Drehrichtung (D2) der angetriebenen ersten Welle (11) in die Kulissenbahn (26) eingeführt und dort drehfest gehalten wird, die dem Halteelement (23) der dritten Welle (10) zugeordnet ist, während das Halteelement (21) der zweiten Welle (9) gleichzeitig aus der Kulissenbahn (25) geführt wird, die dem Haltelement (21) der zweiten Welle (9) zugeordnet ist.

8. Antriebsvorrichtung nach einem der Ansprüche 4 bis 7,
**dadurch gekennzeichnet, dass** eine Länge (L28) des Langloches (28) des Sperrschiebers (16) in Längsrichtung des Sperrschiebers (16) und lotrechte Abstände (L25, L26) zwischen den Endbereichen (22, 24) der Kulissenbahnen (25, 26) und der offenen Bereiche der Kulissenbahnen (25, 26) in Längsrichtung des Sperrschiebers (16) so aufeinander abgestimmt sind, dass jeweils ein Endbereich des Langloches (28), der zu dem Endbereich (22, 24) der Kulissenbahn (25, 26) jeweils abgewandt ist, in dem das Haltelement (21) der zweiten Welle (9) oder das Halteelement (24) der dritten Welle (10) drehfest gehalten ist, an einer zylindrischen Außenseite (38) der ersten Welle (11) anliegt.

9. Antriebsvorrichtung nach einem der Ansprüche 3 bis 8, **dadurch gekennzeichnet, dass** sowohl die zweite Welle (9) als auch die dritte Welle (10) bei Vorliegen des Sperrschiebers (16) in Positionen zwischen seinen beiden Endlagen von der ersten Welle (11) rotatorisch antreibbar sind.

10. Antriebsvorrichtung nach einem der Ansprüche 3 bis 9, **dadurch gekennzeichnet, dass** die Aufnahmen (22, 24) der Kulissenbahnen (25, 26) jeweils mit Hinterschneidungen ausgeführt sind, über die die Haltelemente (21, 23) jeweils mit einer Haltekraft beaufschlagbar sind, die an den Haltelementen (21, 23) jeweils in Richtung der Aufnahmen (22, 24) angreifen.

11. Antriebsvorrichtung nach Anspruch 9 oder 10,
**dadurch gekennzeichnet, dass** die Außenseite (38) der ersten Welle (11), die jeweils mit den Endbereichen des Langloches des Sperrschiebers (16) zusammenwirkt, eine Außenseite einer drehbar auf der ersten Welle (11) gelagerten Hülse (39) ist.

12. Antriebsvorrichtung nach einem der Ansprüche 3 bis 11, **dadurch gekennzeichnet, dass** die Haltelemente (21, 23) jeweils mit zylindrischen Bereichen in die Kulissenbahnen (25, 26) des Sperrschiebers (16) eingreifen.

13. Antriebsvorrichtung nach einem der Ansprüche 1 bis 12, **dadurch gekennzeichnet, dass** die erste Welle (11) als ein Sonnenrad, die zweite Welle (9) als ein Hohlrad und die dritte Welle (10) als ein Planetenträger ausgeführt ist, wobei auf dem Planetenträger (10) wenigstens ein Planetenrad (12) drehbar gelagert ist, das sowohl mit dem Sonnenrad (11) als auch mit dem Hohlrad (9) kämmt.

14. Antriebsvorrichtung nach einem der Ansprüche 3 bis 13, **dadurch gekennzeichnet, dass** wenigstens eines der Haltelemente (23) des Sperrmechanismus (15) formschlüssig in eine Ausnehmung (40) des Sperrschiebers (16) einführbar ist, wobei eine Position des Halteelementes (23) und eine Position der Ausnehmung (40) so aufeinander abgestimmt sind, dass das Haltelement (23) eine lineare Stellbewegung des Sperrschiebers (16) bei vorliegendem Formschluss zwischen dem Haltelement (23) und dem Sperrschieber (16) im Bereich der Ausnehmung (40) sperrt.

## Claims

1. A drive device (6) comprising at least one drive unit (6A) with at least one planetary gear (8) having a first shaft (11), a second shaft (9), and at least a third shaft (10),
wherein a drive torque of the drive unit (6A) can be introduced into the planetary gear (8) via the first shaft (11), and an output torque can be output from the planetary gear (8) via the second shaft (9) and the third shaft (10),
wherein a self-activating locking mechanism (15) is provided, by means of which the second shaft (9) and the third shaft (10) of the planetary gear (8) can be alternately rotationally fixed, while the second shaft (9) or the third shaft (10) can be rotationally driven by the drive unit (6A) via the first shaft (11),
**characterized in that** the locking mechanism (15) comprises a holding element (23) which is fixedly connected to the third shaft (10) and, during an operating state of the planetary gear (8), in which the third shaft (10) is held in a rotationally fixed manner, engages in a rotationally fixed associated receptacle (24).

2. Drive device according to claim 1
**characterized in that** the locking mechanism (15) comprises a holding element (21) which is fixedly connected to the second shaft (9) and, during an operating state of the planetary gear (8) in which the second shaft (9) is held in a rotationally fixed manner, engages in a rotationally fixed associated receptacle (22).

3. Drive device according to claim 2,
**characterized in that** the receptacles (22, 24) of the locking mechanism (15) each represent end regions of guide tracks (25, 26) of a locking slide (16) that can be displaced longitudinally between two end positions.

4. Drive device according to claim 3,
**characterized in that** the locking slide (16), which is longitudinally movable between two end positions, is linearly mounted in the region of a housing (27) and extends in the radial direction (R8) of the planetary gear (8) and is designed with an elongated hole (28) into which the first shaft (11) engages and which extends in the longitudinal direction of the locking slide (16) in the locking slide (16).

5. Drive device according to claim 3 or 4,
**characterized in that** the guide tracks (25, 26) are each provided in opposite end regions of the locking slide (16), wherein the guide tracks (25, 26) are open in the region of mutually opposite sides (16A, 16B) of the locking slide (16), and the holding elements (21, 23) can be inserted into and removed from the guide tracks (25, 26) via the open regions of the guide tracks (25, 26) during a rotational movement of the second shaft (9) and the third shaft (10).

6. Drive device according to claim 5,
**characterized in that** the guide tracks (25, 26), starting from the open areas, are each designed with track sections (34, 35) extending obliquely toward one another, the courses of which each form an acute angle with a longitudinal direction of the locking slide (16), and which are adjoined by further track sections (36, 37) extending toward one another in the longitudinal direction of the locking slide (16), and comprising the end areas (22, 24) of the guide tracks (25, 26).

7. Drive device according to claim 6,
**characterized in that** the track section (34 or 36) of a guide track (25 or 26) is adapted to the further track section (37 or 35) of the other guide track (26 or 25) in such a way that the holding element (21) of the second shaft (9) is, depending on the direction of rotation (D1) of the driven first shaft (11), inserted into the guide track (25) which is assigned to the holding element (21) of the second shaft (9) and is held there in a rotationally fixed manner, while the holding element (23) of the third shaft (10) is simultaneously guided out of the guide track (26) which is assigned to the holding element (23) of the third shaft (10), and **in that** the holding element (23) of the third shaft (10) is, depending on the direction of rotation (D2) of the driven first shaft (11), inserted into the guide track (26), which is assigned to the holding element (23) of the third shaft (10) and is held there in a rotationally fixed manner, while the holding element (21) of the second shaft (9) is simultaneously guided out of the guide track (25) which is assigned to the holding element (21) of the second shaft (9).

8. Drive device according to one of claims 4 to 7,
**characterized in that** a length (L28) of the elongated hole (28) of the locking slide (16) in the longitudinal direction of the locking slide (16) and vertical distances (L25, L26) between the end regions (22, 24) of the guide tracks (25, 26) and the open regions of the guide tracks (25, 26) in the longitudinal direction of the locking slide (16) are matched with one another such that an end region of the elongated hole (28) facing away from the end region (22, 24) of the guide track (25, 26) in which the holding element (21) of the second shaft (9) or the holding element (24) of the third shaft (10) is held in a rotationally fixed manner bears against a cylindrical outer side (38) of the first shaft (11).

9. Drive device according to one of claims 3 to 8,
**characterized in that** both the second shaft (9) and the third shaft (10) can be rotationally driven by the first shaft (11) when the locking slide (16) is in positions between its two end positions.

10. Drive device according to one of claims 3 to 9,
**characterized in that** the receptacles (22, 24) of the guide tracks (25, 26) are each designed with undercuts, via which the holding elements (21, 23) can each be subjected to with a holding force, which acts on the holding elements (21, 23) in the direction of the receptacles (22, 24).

11. Drive device according to claim 9 or 10,
**characterized in that** the outer side (38) of the first shaft (11), which cooperates with the respective end regions of the elongated hole of the locking slide (16), is an outer side of a sleeve (39) rotatably mounted on the first shaft (11).

12. Drive device according to one of claims 3 to 11,
**characterized in that** the holding elements (21, 23) each engage with cylindrical portions in the guide tracks (25, 26) of the locking slide (16).

13. Drive device according to one of claims 1 to 12,
**characterized in that** the first shaft (11) is designed as a sun gear, the second shaft (9) as a ring gear, and the third shaft (10) as a planetary carrier, wherein at least one planetary gear (12) is rotatably mounted on the planetary carrier (10), which planetary gear meshes with both the sun gear (11) and the ring gear (9).

14. Drive device according to one of claims 3 to 13,
**characterized in that** at least one of the holding elements (23) of the locking mechanism (15) can be inserted into a recess (40) of the locking slide (16) in a form-fitting manner, wherein a position of the holding element (23) and a position of the recess (40) are correlated with one another such that the holding element (23) blocks a linear actuating movement of the locking slide (16) during a form-fitting connection between the holding element (23) and the locking slide (16) in the region of the recess (40).

## Revendications

1. Dispositif d'entraînement (6) comprenant au moins une unité d'entraînement (6A) avec au moins un engrenage planétaire (8) comportant un premier arbre (11), un deuxième arbre (9) et au moins un troisième arbre (10), dans lequel un couple d'entraînement de l'unité d'entraînement (6A) peut être introduit dans l'engrenage planétaire (8) via le premier arbre (11), et un couple de sortie peut être transmis depuis l'engrenage planétaire (8) via le deuxième arbre (9) et le troisième arbre (10),
dans lequel est prévu un mécanisme de verrouillage à activation automatique (15) au moyen duquel le deuxième arbre (9) et le troisième arbre (10) de l'engrenage planétaire (8) peuvent être fixés en rotation de manière alternée, tandis que le deuxième arbre (9) ou le troisième arbre (10) peut être entraîné en rotation par l'unité d'entraînement (6A) via le premier arbre (11),
**caractérisé en ce que** le mécanisme de verrouillage (15) comprend un élément de retenue (23) qui est relié de manière fixe au troisième arbre (10) et qui, pendant un état de fonctionnement de l'engrenage planétaire (8) dans lequel le troisième arbre (10) est maintenu de manière fixe en rotation, s'engage dans un réceptacle associé (24) fixe en rotation.

2. Dispositif d'entraînement selon la revendication 1
**caractérisé en ce que** le mécanisme de verrouillage (15) comprend un élément de retenue (21) qui est relié de manière fixe au deuxième arbre (9) et qui, pendant un état de fonctionnement de l'engrenage planétaire (8) dans lequel le deuxième arbre (9) est maintenu de manière fixe en rotation, s'engage dans un logement associé (22) fixe en rotation.

3. Dispositif d'entraînement selon la revendication 2,
**caractérisé en ce que** les logements (22, 24) du mécanisme de verrouillage (15) représentent chacun des zones d'extrémité des rails de guidage (25, 26) d'un coulisseau de verrouillage (16) qui peut être déplacé longitudinalement entre deux positions d'extrémité.

4. Dispositif d'entraînement selon la revendication 3,
**caractérisé en ce que** le coulisseau de verrouillage (16), qui est mobile longitudinalement entre deux positions d'extrémité, est monté de manière linéaire dans la région d'un boîtier (27) et s'étend dans la direction radiale (R8) de l'engrenage planétaire (8) et est conçu avec un trou allongé (28) dans lequel s'engage le premier arbre (11) et qui s'étend dans la direction longitudinale du coulisseau de verrouillage (16) dans le coulisseau de verrouillage (16).

5. Dispositif d'entraînement selon la revendication 3 ou 4,
**caractérisé en ce que** les rails de guidage (25, 26) sont chacun prévus dans des zones d'extrémité opposées du coulisseau de verrouillage (16), les rails de guidage (25, 26) étant ouverts dans la zone des côtés opposés (16A, 16B) du coulisseau de verrouillage (16), et les éléments de retenue (21, 23) peuvent être insérés dans les rails de guidage (25, 26) et retirés de celles-ci via les zones ouvertes des rails de guidage (25, 26) pendant un mouvement de rotation du deuxième arbre (9) et du troisième arbre (10).

6. Dispositif d'entraînement selon la revendication 5,
**caractérisé en ce que** les rails de guidage (25, 26), à partir des zones ouvertes, sont chacun conçus avec des sections de rail (34, 35) s'étendant obliquement l'une vers l'autre, dont les trajectoires forment chacune un angle aigu avec une direction longitudinale du coulisseau de verrouillage (16), et qui sont reliées par d'autres sections de rail (36, 37) s'étendant l'une vers l'autre dans la direction longitudinale du coulisseau de verrouillage (16) et comprenant les zones d'extrémité (22, 24) des rails de guidage (25, 26).

7. Dispositif d'entraînement selon la revendication 6,
**caractérisé en ce que** la section de rail (34 ou 36) d'un rail de guidage (25 ou 26) est adaptée à la section de rail supplémentaire (37 ou 35) de l'autre rail de guidage (26 ou 25) de telle manière que l'élément de retenue (21) du deuxième arbre (9) est, en fonction du sens de rotation (D1) du premier arbre entraîné (11), est inséré dans le rail de guidage (25) qui est attribué à l'élément de retenue (21) du deuxième arbre (9) et y est maintenu de manière fixe en rotation, tandis que l'élément de retenue (23) du troisième arbre (10) est simultanément guidé hors du rail de guidage (26) qui est attribué à l'élément de retenue (23) du troisième arbre (10), et **en ce que** l'élément de retenue (23) du troisième arbre (10) est, en fonction du sens de rotation (26) qui est attribuée à l'élément de retenue (23) du troisième arbre (10), et **en ce que** l'élément de retenue (23) du troisième arbre (10) est, en fonction du sens de rotation (D2) du premier arbre entraîné (11), inséré dans le rail de guidage (26) qui est attribuée à l'élément de retenue (23) du troisième arbre (10) et y est maintenu de manière fixe en rotation, tandis que l'élément de retenue (21) du deuxième arbre (9) est simultanément guidé hors du rail de guidage (25) qui est attribué à l'élément de retenue (21) du deuxième arbre (9).

8. Dispositif d'entraînement selon l'une des revendications 4 à 7,
**caractérisé en ce qu'**une longueur (L28) du trou allongé (28) du coulisseau de verrouillage (16) dans la direction longitudinale du coulisseau de verrouillage (16) et des distances verticales (L25, L26) entre les zones d'extrémité (22, 24) des rails de guidage (25, 26) et les zones ouvertes des rails de guidage (25, 26) dans la direction longitudinale du coulisseau de verrouillage (16) sont adaptées les unes aux autres de telle sorte qu'une zone d'extrémité du trou allongé (28) opposée à la zone d'extrémité (22, 24) du rail de guidage (25, 26) dans laquelle l'élément de retenue (21) du deuxième arbre (9) ou l'élément de retenue (24) du troisième arbre (10) est maintenu de manière fixe en rotation s'appuie contre un côté extérieur cylindrique (38) du premier arbre (11).

9. Dispositif d'entraînement selon l'une des revendications 3 à 8, **caractérisé en ce que** le deuxième arbre (9) et le troisième arbre (10) peuvent tous deux être entraînés en rotation par le premier arbre (11) lorsque le coulisseau de verrouillage (16) se trouve dans une position comprise entre ses deux positions extrêmes.

10. Dispositif d'entraînement selon l'une des revendications 3 à 9, **caractérisé en ce que** les logements (22, 24) des rails de guidage (25, 26) sont chacun conçus avec des contre-dépouilles, par l'intermédiaire desquelles les éléments de retenue (21, 23) peuvent chacun être soumis à une force de retenue qui agit sur les éléments de retenue (21, 23) dans la direction des logements (22, 24).

11. Dispositif d'entraînement selon la revendication 9 ou 10,
**caractérisé en ce que** le côté extérieur (38) du premier arbre (11), qui coopère avec les régions d'extrémité respectives du trou allongé du coulisseau de verrouillage (16), est un côté extérieur d'un manchon (39) monté de manière rotative sur le premier arbre (11).

12. Dispositif d'entraînement selon l'une des revendications 3 à 11,
**caractérisé en ce que** les éléments de retenue (21, 23) s'engagent chacun avec des parties cylindriques dans les rails de guidage (25, 26) du coulisseau de verrouillage (16).

13. Dispositif d'entraînement selon l'une des revendications 1 à 12,
**caractérisé en ce que** le premier arbre (11) est conçu comme une roue solaire, le deuxième arbre (9) comme une couronne dentée et le troisième arbre (10) comme un porte-satellites, dans lequel au moins un planétaire (12) est monté de manière rotative sur le porte-satellites (10), lequel engrenage planétaire engrène à la fois avec la roue solaire (11) et la couronne dentée (9).

14. Dispositif d'entraînement selon l'une des revendications 3 à 13,
**caractérisé en ce qu'**au moins l'un des éléments de retenue (23) du mécanisme de verrouillage (15) peut être inséré dans un évidement (40) du coulisseau de verrouillage (16) par complémentarité de forme, la position de l'élément de retenue (23) et la position de l'évidement (40) étant corrélées entre elles de telle sorte que l'élément de retenue (23) bloque un mouvement d'actionnement linéaire du coulisseau de verrouillage (16) lors d'une liaison par complémentarité de forme entre l'élément de retenue (23) et le coulisseau de verrouillage (16) dans la zone de l'évidement (40).
